# EUROPEAN PATENT APPLICATION

(11) **EP 4 556 105 A1**
(43) Date of publication of application: **21.05.2025**
(21) Application number: 23839666.7
(22) Date of filing: 12.07.2023
(51) Int. Cl.: B01D 61/58, B01D 53/22

(54) **GAS SEPARATION SYSTEM AND ENRICHED GAS PRODUCTION METHOD**

(30) Priority: 14.07.2022 JP 2022113547
(71) Applicant: UBE Corporation, Ube-shi, Yamaguchi 755-8633 (JP)
(72) Inventor: FUKUDA, Nobuhiko, Ube-shi, Yamaguchi 755-8633 (JP); NAKAMURA, Tomohide, Ube-shi, Yamaguchi 755-8633 (JP); INDE, Hiroki, Ube-shi, Yamaguchi 755-8633 (JP)
(74) Representative: Forstmeyer, Dietmar
(86) International application number: PCT/JP2023/025795
(87) International publication number: WO 2024/014494

(57) **Abstract**

The non-permeate gas outlet 11b of the first unit 11 and the gas inlet 12a of the second unit 12 are connected by a non-permeate gas discharge line 14. The permeate gas outlet 11c of the first unit and the gas inlet 13a of the third unit are connected by a permeate gas discharge line 15. A raw material mixed gas supply line 16 is connected to the gas inlet 11a of the first unit. The outlet 12c of the second unit 12 and the line 16 are connected by a permeate gas return line 17. The outlet 13b of the third unit 13 and the line 16 are connected by a non-permeate gas return line 18. Further, the line 15 is provided with a discard line 50 for discharging a part of the permeate gas of the first unit 11 to the outside of the system.

## Description

### Technical Field

The present invention relates to a gas separation system for separating a mixed gas using a plurality of gas separation membrane units, and a method for producing an enriched gas using the gas separation system.

### Background Art

As a method for separating a mixed gas containing two or more gases into respective gases, a membrane separation method using a difference in permeation rate of a gas with respect to a membrane is known. In this method, a gas having high purity and high permeability and/or a gas having high-purity a low-permeability, which are target gases, can be obtained by collecting the permeate gas and/or the non-permeate gas. The permeation rate, which is the permeation volume per film area, unit time, and unit partial pressure difference of each gas contained in the mixed gas with respect to the film, can be expressed by P' (unit: × 10⁻⁵cm³(STP)/cm² • sec • cmHg). The gas separation selectivity of the membrane can also be expressed as a ratio of (permeation rate of gas gas having high permeability/permeation rate of gas having low permeability).

In general, in a gas separation membrane, a membrane having a high gas separation selectivity has a low gas permeation rate, whereas a membrane having a high gas permeation rate has a low gas separation selectivity. Therefore, in the case where a gas having low-permeability is recovered from the mixed gas using the single-stage gas separation membrane, when the purity of the recovered gas is constant, the recovery rate becomes high when using the membrane having high gas separation selectivity. However, due to the low permeation rate, it is necessary to increase the membrane area or to increase the operation pressure. On the other hand, in the case of using a membrane having a high permeation rate, it is not necessary to increase the membrane area or the operation pressure, but the recovery rate is low because of the low gas separation selectivity.

In general, a gas separation membrane having selective gas permeability is used as a gas separation membrane module in which the gas separation membrane is accommodated in a container provided with at least a gas inlet, a permeate gas outlet, and a non-permeate gas outlet. The gas separation membrane is mounted in the container such that a space on the gas supply side and a space on the gas permeation side are isolated from each other. In a gas separation system, a gas separation membrane unit in which a plurality of gas separation membrane modules are combined in parallel is generally used in order to obtain a required membrane area. Since the plurality of gas separation membrane modules constituting the gas separation membrane unit share a gas inlet, a non-permeate gas outlet, and a permeate gas outlet, the gas separation membrane unit acts as a substantially large gas separation membrane module.

In order to recover a target low-permeability gas at a high purity and a high recovery rate, a method for using a system provided with this gas separation membrane unit in multiple stages is known. Examples of the multistage gas separation system include a system that further separates the first-stage non-permeate gas enriched with the low-permeability gas in order to improve purity, and a system that recovers the low-permeability gas contained in the first-stage permeate gas in order to improve recovery rate.

Regarding a multistage gas separation membrane unit, for example, Patent Literature 1 proposes a gas separation method including three gas separation membrane units of concentrate separation steps (1) to (3). In the gas separation method described in Patent Literature 1, the mixed gas to be separated is supplied to the concentrate separation step (1) (first gas separation membrane unit). The non-permeate gas discharged in the concentrate separation step (1) is supplied to the concentrate separation step (2) (second gas separation membrane unit), and the permeate gas discharged from the first gas separation membrane unit is supplied to the concentrate separation step (3) (third gas separation membrane unit). Further, the permeate gas discharged from the second gas separation membrane unit and the non-permeate gas discharged from the third gas separation membrane unit are returned to the first gas separation membrane unit (see Fig. 11 of the Literature).

### Citation List

### Patent Literature

Patent Literature 1: US2013/0098242A1

### Summary of Invention

In the gas separation system described in Patent Literature 1, in the case that the composition or the flow rate of the raw material mixed gas fluctuates, if the operation is continued without changing the configuration of each gas separation membrane unit, the purity and the recovery rate of the enriched gas (product gas) fluctuates. In order to maintain the purity and recovery rate of the enriched gas (product gas) within a certain range, it is necessary to change the number of modules to be operated in the gas separation membrane unit. In this case, equipment modification (additional installation of the gas separation membrane module) is required to increase the number of operations, and even when the number of operations is reduced, a closing valve of each module is required, and a difference (variation) in the degree of contamination (gas permeation performance) occurs with time between the module that continues to operate and the closed module, which may lead to a decrease in system performance.

Accordingly, problems of the present invention is to provide a gas separation system and a method for producing an enriched gas capable of solving the above-described drawbacks of the related art.

As a result of intensive studies to solve the above problems, the present inventors have found that, by providing a line for partially discarding the permeate gas discharged from the unit in the permeate discharge line of the first gas separation membrane unit and adjusting the amount of the permeate gas supplied to the third gas separation membrane unit 13, it is possible to surprisingly continue the operation of the system while effectively suppressing the influence on the purity and recovery rate of the product gas without changing the number of modules to be operated.

The present invention has been made on the basis of the above-described findings, and the problems are solved by providing the following [1] to [8].
[1] A gas separation system for supplying raw material mixed gas to gas separation membrane unit and enriching at least one of gases contained in raw material mixed gas,
   wherein the gas separation system comprises: a first gas separation membrane unit; a second gas separation membrane unit, and a third gas separation membrane unit,
   the first gas separation membrane unit, the second gas separation membrane unit and the third gas separation membrane unit each include at least a gas inlet, a permeate gas outlet, and a non-permeate gas outlet,
   the non-permeate gas outlet of the first gas separation membrane unit and the gas inlet of the second gas separation membrane unit are connected by a non-permeate gas discharge line,
   the permeate gas outlet of the first gas separation membrane unit and the gas inlet of the third gas separation membrane unit are connected by a permeate gas discharge line,
   a raw material mixed gas supply line is connected to the gas inlet of the first gas separation membrane unit, and a compression part is disposed in the middle of the raw material mixed gas supply line,
   the permeate gas outlet of the second gas separation membrane unit and a position on the suction side of the compression part in the raw material mixed gas supply line are connected by a permeate gas recycle line,
   the non-permeate gas outlet of the third gas separation membrane unit and a position on the suction side of the compression part in the raw material mixed gas supply line are connected by a non-permeate gas recycle line,
   concentrated and enriched gas is taken out from the non-permeate gas outlet of the second gas separation membrane unit, and
   the permeate gas discharge line includes a first permeate gas discard line for discharging a part of the permeate gas discharged from the first gas separation membrane unit to the outside of the gas separation system.
[2] The gas separation system as set forth in [1], wherein in operation and/or between operations of the gas separation system, the number of operating modules of the third gas separation membrane unit is constant.
[3] The gas separation system as set forth in [1] or [2], wherein a combustion device was connected to an outlet of the first permeate gas discard line.
[4] The gas separation system as set forth in any one of [1] to [3], wherein an outlet of the first permeate gas discard line and the permeate gas outlet of the third separation membrane unit are connected by a mixing line, and a mixing line outlet is provided in the mixing line.
[5] The gas separation system as set forth in [4], wherein a combustion device was connected to the mixing line outlet.
[6] The gas separation system as set forth in any one of [1] to [5], wherein the gas separation system is configured such that the amount of permeate gas discharged to the outside of the system through the first permeate gas discard line is increased or decreased based on a change in the flow rate of the raw material mixed gas, a change in the composition of the raw material mixed gas, or a change in the concentration of the separation target gas in the gas discharged to the outside of the system.
[7] The gas separation system as set forth in any one of [1] to [5], wherein the raw material mixed gas comprises a biogas or a landfill gas.
[8] A method for producing enriched gas by supplying raw material mixed gas to a gas separation system and enriching at least one of gases contained in raw material mixed gas,
   wherein the gas separation system comprises: a first gas separation membrane unit; a second gas separation membrane unit, and a third gas separation membrane unit,
   the first gas separation membrane unit, the second gas separation membrane unit and the third gas separation membrane unit each include at least a gas inlet, a permeate gas outlet, and a non-permeate gas outlet,
   the non-permeate gas outlet of the first gas separation membrane unit and the gas inlet of the second gas separation membrane unit are connected by a non-permeate gas discharge line,
   the permeate gas outlet of the first gas separation membrane unit and the gas inlet of the third gas separation membrane unit are connected by a permeate gas discharge line,
   a raw material mixed gas supply line is connected to the gas inlet of the first gas separation membrane unit, and a compression part is disposed in the middle of the raw material mixed gas supply line,
   the permeate gas outlet of the second gas separation membrane unit and a position on the suction side of the compression part in the raw material mixed gas supply line are connected by a permeate gas recycle line,
   the non-permeate gas outlet of the third gas separation membrane unit and a position on the suction side of the compression part in the raw material mixed gas supply line are connected by a non-permeate gas recycle line,
   concentrated and enriched gas is taken out from the non-permeate gas outlet of the second gas separation membrane unit, and
   the permeate gas discharge line includes a first permeate gas discard line for discharging a part of the permeate gas discharged from the first gas separation membrane unit to the outside of the gas separation system.

### Description of Drawings

[Fig. 1] Fig. 1 is a schematic diagram showing a configuration of a gas separation system according to a first embodiment of the present invention.
[Fig. 2] Fig. 2 is a schematic view showing a structure of one example of a gas separation membrane module used in the gas separation system of the present invention.
[Fig. 3] Fig. 3 is a schematic diagram showing a configuration of a gas separation system according to a second embodiment of the present invention.
[Fig. 4] Fig. 4 is a schematic diagram showing a configuration of a gas separation system according to a third embodiment of the present invention.

### Description of Embodiments

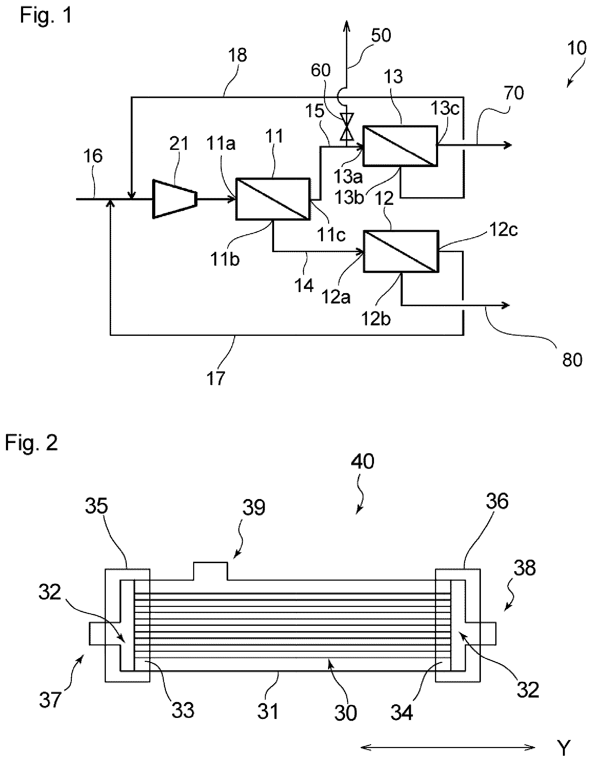

Hereinafter, the present invention will be described based on preferred embodiments and embodiments thereof with reference to the drawings. First, a gas separation system 10 according to a first embodiment of the present invention and an enriched gas production method according to a first embodiment of the present invention for producing an enriched gas using the same will be described with reference to Fig. 1. A gas separation system 10 shown in Fig. 1 includes a first gas separation membrane unit 11, a second gas separation membrane unit 12, and a third gas separation membrane unit 13, which are three gas separation membrane units. As each of the gas separation membrane units 11, 12, and 13, for example, as shown in Fig. 2, a module 40 in which a gas separation membrane 30 made of a hollow fiber membrane or the like and having gas selective permeability is accommodated in a casing 31 can be used. Each of the gas separation membrane units 11, 12, and 13 of the present embodiment include the single gas separation membrane module 40 shown in Fig. 2, or include a plurality of the modules 40 arranged in parallel. Two opposing surfaces of the casing 31 of the module 40 are opened to form an opening 32. It should be noted that the opening 32 is for inserting the gas separation membrane 30 into the casing 31, and is not an opening of the gas separation membrane 30. The gas separation membrane 30 is accommodated in the casing 31 through the opening 32. In the case where the gas separation membrane 30 is formed of a bundle of hollow fiber membranes, the gas separation membrane 30 is housed in the casing 31 in the housed state such that each end portion of the hollow fiber membrane is opened in the vicinity of each opening 32 of the casing 31.

In a state where the gas separation membrane 30 is housed in the casing 31, the gas separation membrane 30 is fixed to the inner wall of the casing 31 by the tube plates 33 and 34 at positions of both end portions in the Y direction where the hollow fiber membrane extends. Each opening 32 of the casing 31 is closed by lids 35 and 36. The lid 35 is provided with a gas inlet 37. On the other hand, the lid 36 is provided with a non-permeate gas outlet 38. The mixed gas to be separated is introduced into the module from the gas inlet 37 of the lid 35. Of the introduced gas, the gas that has permeated the gas separation membrane 30 is discharged to the outside of the module through a permeate gas outlet 39 provided in the casing 31. On the other hand, the non-permeate gas that has not permeated the gas separation membrane 30 is discharged from the non-permeate gas outlet 38 of the lid 36 to the outside of the module. In some cases, a purge gas supply port (not shown) may be provided in the casing 31. Although the separation membrane module of Fig. 2 has been described as an example, the present invention can be applied to separation membrane modules having other configurations, and can be applied to, for example, a shell feed type module.

Returning to Fig. 1, as shown in Fig. 1, the first gas separation membrane unit 11 and the second gas separation membrane unit 12 are connected in series. Specifically, the first gas separation membrane unit 11 and the second gas separation membrane unit 12 are connected by connecting the non-permeate gas outlet 11b of the first gas separation membrane unit 11 and the gas inlet 12a of the second gas separation membrane unit 12 by the non-permeate gas discharge line 14.

As shown in Fig. 1, the first gas separation membrane unit 11 and the third gas separation membrane unit 13 are connected in series. Specifically, the first gas separation membrane unit 11 and the third gas separation membrane unit 13 are connected by connecting the permeate gas outlet 11c of the first gas separation membrane unit 11 and the gas inlet 13a of the third gas separation membrane unit 13 by the permeate gas discharge line 15.

A raw material mixed gas supply line 16 for supplying a raw material mixed gas from a mixed gas source (not shown) as a raw material to the first gas separation membrane unit 11 is connected to the gas inlet 11a of the first gas separation membrane unit 11. A compression part 21 is disposed in the middle of the raw material mixed gas supply line 16. The compression part 21 is installed for the purpose of pressurizing the mixed gas supplied from the mixed gas source. In addition, The compression part 21 is installed for the purpose of pressurizing the permeate gas when the permeate gas discharged from the second gas separation membrane unit 12 is returned to the first gas separation membrane unit 11, and for the purpose of pressurizing the non-permeate gas when the non-permeate gas discharged from the third gas separation membrane unit 13 is returned to the first gas separation membrane unit 11.

In the second gas separation membrane unit 12, the permeate gas outlet 12c is connected to the position on the suction side of the compression part 21 in the raw material mixed gas supply line 16 by the permeate gas return line 17. On the other hand, in the third gas separation membrane unit 13, the non-permeate gas outlet 13b is connected to the position on the suction side of the compression part 21 in the raw material mixed gas supply line 16 by the non-permeate gas return line 18.

As shown in Fig. 1, the permeate gas discharge line 15 is provided with a first permeate gas discard line 50 for discharging a part of the permeate gas discharged from the first gas separation membrane unit 11 to the outside of the system. The discharge to the outside of the system means, for example, the discharge to the outside of the gas flow path formed of the first gas separation membrane unit 11, the second gas separation membrane unit 12, and the third gas separation membrane unit 13. With the above configuration, a part of the permeate gas discharged from the first gas separation membrane unit 11 is discharged to the outside of the system through the first permeate gas discard line 50. In this embodiment, the first permeate gas discard line 50 is connected to the outside of the system without being connected to any of the first gas separation membrane unit 11, the second gas separation membrane unit 12, and the third gas separation membrane unit 13 on the discharge side (the outlet side). In Fig. 1, the first permeate gas discard line 50 is provided as a branch line branched from the permeate gas discharge line 15. The branch line branches out of the system from a position middle between the gas outlet 11c and the gas inlet 13a in the permeate gas discharge line 15. The ratio of the permeate gas (Hereinafter, it is also referred to as "discharged gas".) discharged to the outside of the system through the first permeate gas discard line 50 to the total permeate gas discharged from the first gas separation membrane unit 11 can be adjusted by a flow rate control valve 60 provided at a branch point in the first permeate gas discard line 50.

The operation of the gas separation system 10 of the present embodiment having the above-described configuration will be described. The raw material mixed gas to be separated is supplied from a mixed gas source (not shown) to the first gas separation membrane unit 11 through a raw material mixed gas supply line 16. Prior to the supply, the raw material mixed gas is pressurized by the compression part 21, and the pressure of the raw material mixed gas is increased. As the compression part 21, the same part as those used in the technical field can be used. For example, a compressor can be used.

The raw material mixed gas includes at least a gas A and a gas B which are two different kinds of gases to be separated. The types of the gas A and the gas B are not particularly limited. When the mixed gas pressurized by the compression part 21 is supplied to the first gas separation membrane unit 11, the mixed gas is separated into a permeate gas, which is a gas that has permeated through the gas separation membrane, and a non-permeate gas, which is a gas that has not permeated through the gas separation membrane, due to a difference in permeation rate with respect to the gas separation membrane. In the following description, for convenience, the gas A is a gas having a high permeation rate with respect to the gas separation membrane, that is, a gas having high permeability, and the gas B is a gas having a low permeation rate with respect to the gas separation membrane, that is, a gas having low permeability.

The non-permeate gas discharged from the first gas separation membrane unit 11 is a gas in which the gas B is concentrated as compared with the mixed gas as a raw material. The non-permeate gas is discharged from the non-permeate gas outlet 11b of the first gas separation membrane unit 11, and is supplied to the second gas separation membrane unit 12 through the non-permeate gas discharge line 14.

On the other hand, the permeate gas from the first gas separation membrane unit 11 is a gas in which the gas B is concentrated as compared with the mixed gas as a raw material. The permeate gas is discharged from the permeate gas outlet 11c of the first gas separation membrane unit 11, and a part of the permeate gas is taken out of the system through the first permeate gas discard line 50, and an another part of the permeate gas is supplied to the third gas separation membrane unit 13 through the permeate gas discharge line 15.

The gas (This gas is enriched with gas A.) introduced into the third gas separation membrane unit 13 is separated into a permeate gas and a non-permeate gas by the unit 13. The permeate gas is further enriched in the gas A as compared with the gas introduced into the third gas separation membrane unit 13, and is taken out from the permeate gas outlet 13c of the unit 13. On the other hand, the non-permeate gas is discharged from the non-permeate gas outlet 13b of the third gas separation membrane unit 13, and is returned to the suction side of the compression part 21 in the raw material mixed gas supply line 16 via the non-permeate gas return line 18 connected to the outlet 13b.

On the other hand, the non-permeate gas of the first gas separation membrane unit introduced into the second gas separation membrane unit 12 is separated into the permeate gas and the non-permeate gas by the unit 12. The non-permeate gas is further enriched in the gas B as compared with the gas introduced into the second gas separation membrane unit 12, and is taken out from the non-permeate gas outlet 12b of the unit 12. On the other hand, the permeate gas is discharged from the permeate gas outlet 12c of the second gas separation membrane unit 12, and is returned to the suction side of the compression part 21 in the raw material mixed gas supply line 16 via the permeate gas return line 17 connected to the outlet 12c. The returned permeate gas and non-permeate gas are mixed with a mixed gas as a raw material, and then pressurized by the compression part 21.

In general, the gas A contained in the mixed gas has relatively higher permeability than the gas B with respect to any of the gas separation membrane units 11, 12, and 13. On the other hand, the gas B contained in the mixed gas has relatively lower permeability than the gas A with respect to any of the gas separation membrane units 11, 12, and 13.

The present invention is particularly effective when the flow rate of the raw material mixed gas is not stable. For example, when the flow rate of the raw material mixed gas increases, both the non-permeate gas and the permeate gas from the first gas separation membrane unit 11 increase. In this case, in the present invention, by partially discarding the permeate gas of the first gas separation membrane unit 11 when the flow rate increases, the permeate gas of the first gas separation membrane unit 11 can be circulated in a gas amount suitable for the membrane area of the third gas separation membrane unit 13 without increasing the membrane area of the third gas separation membrane unit 13.

Conventionally, when the flow rate of the raw material mixed gas is increased, the membrane area of the third gas separation membrane unit 13 is insufficient, the gas A is likely to be contained in the non-permeate gas discharged from the unit 13, the flow rate of the gas A contained in the gas shared by the first gas separation membrane unit 11 and the non-permeate gas discharged from the first gas separation membrane unit 11 is likely to be increased, the product gas purity is likely to be lowered, and the flow rate of the return gas from the third gas separation membrane unit 13 and the second gas separation membrane unit 12 is likely to be increased, since the suction flow rate of the compression part 21 is increased, the required compression energy is increased. Therefore, in the related art, it is necessary to increase the membrane area of the third gas separation membrane unit 13 by, for example, increasing the number of gas separation membrane modules constituting the third gas separation membrane unit 13.

The present invention is also effective when the flow rate of the raw material mixed gas is reduced. When the flow rate of the raw material mixed gas decreases, both the non-permeate gas and the permeate gas from the first gas separation membrane unit 11 decrease. In this case, in the present invention, by reducing the flow rate to be discarded as a part of the permeate gas of the first gas separation membrane unit 11, the permeate gas of the first gas separation membrane unit 11 can be circulated in a gas amount suitable for the membrane area of the third gas separation membrane unit 13 without reducing the membrane area of the third gas separation membrane unit 13.

On the other hand, in the related art, when the flow rate of the raw material mixed gas decreases, the membrane area of the third gas separation membrane unit 13 becomes excessive, the gas B is easily contained in the permeate gas discharged from the unit 13, the recovery rate of the gas B decreases, and the concentration of the gas B of the gas discharged to the outside of the system increases. Therefore, in the related art, it is necessary to reduce the membrane area of the third gas separation membrane unit 13 by, for example, reducing the number of gas separation membrane modules constituting the third gas separation membrane unit 13.

For example, in the case where the gas B is methane, the upper limit of the discharge concentration is defined because the gas B is a greenhouse gas, and when the upper limit is exceeded, direct discharge becomes impossible and combustion becomes necessary in some cases. Thus, when methane is gas B, the methane emission concentration in the system is very important because it is indicative of environmental regulations in the system. In the present invention, as described above, since the concentration of the gas B in the exhaust gas can be controlled in accordance with the change in the flow rate of the raw material mixed gas, the system design in consideration of the environment can be further facilitated.

It should be noted that the change in the flow rate of the raw material mixed gas may be either in the operation or between the operations, and the present invention can cope with either of the changes in the flow rate of the raw material mixed gas by changing the amount of the discarded gas.

The change in the flow rate of the raw material mixed gas can be detected by a sensor (not shown). In addition, the system may include a control device (not illustrated) that includes a CPU, a memory, and the like, detects a change in the flow rate and composition of the raw material mixed gas, and/or a change in the concentration of the separation target gas in the gas discharged to the outside of the system, and adjusts the flow rate adjustment valve 60 based on the amount of change in the flow rate of the raw material mixed gas, and the like. With these configurations, the above-described control is possible. The amount of the discarded gas can be set by calculation based on, for example, the operation temperature and the operation pressure of each unit, the gas separation selectivity of each unit, the raw material mixed gas flow rate, the number of modules, and the like (the same applies hereinafter). Instead of or in addition to the flow rate adjustment valve 60, a flow rate adjustment valve may be provided in the line 15 to regulate the discarded amount.

Conventionally, in a multi-stage gas separation system in which a gas discharged from a non-permeate gas outlet is taken out as a product gas, discarding the permeate gas of the first gas separation membrane unit 11, which is a gas in the middle of purification, has not been considered at all. This is because the recovery rate of the product gas is lowered. However, as a result of further study, the present inventors have found that, in the present system, contrary to the conventional technical common knowledge, by performing the discarding, it is possible to surprisingly achieve both high purity of the product gas and a certain recovery rate or more.

As described above, in the present system, a purity of the product gas can be maintained without increasing or decreasing the number of gas separation membrane modules by adjusting the discarded amount of the discarded gas from the first permeate gas discard line 50 with respect to the change in the flow rate of the raw material mixed gas, and the reduction in the recovery rate is limited. Accordingly, since the number of gas separation membrane modules used in the gas separation system can be stabilized, the above-described module contamination can be prevented, and the overall cost such as the manufacturing cost and maintenance cost of the gas separation system can be reduced.

Further, in the present invention, it is possible to easily deal with a change in the composition of the raw material mixed gas. For example, when the ratio of the gas B in the raw material mixed gas is decreased and the ratio of the gas A is increased while feed of the raw material mixed gas is on and/or off, in the present invention, the purity of the product gas can be maintained without increasing the number of modules of the third gas separation membrane unit 13 by increasing the amount of the discarded gas from the first permeate gas discard line 50.

On the other hand, in the related art, when the ratio of the gas B in the raw material mixed gas decreases and the ratio of the gas A increases during the supply and/or the stop of the supply of the raw material mixed gas, the flow rate of the permeate gas in the first gas separation membrane unit 11 easily increases, and the amount of the gas A in the permeate gas in the first gas separation membrane unit 11 easily increases. In this case, it is necessary to increase the membrane area of the third gas separation membrane unit 13 in order to prevent a decrease in product gas purity. In addition, the required compression energy was increased.

In addition, the present invention is also effective when the ratio of the gas B in the raw material mixed gas increases and the ratio of the gas A decreases while the raw material mixed gas is being supplied and/or while the supply of the raw material mixed gas is stopped. In this case, in the present invention, by reducing the flow rate to be discarded as a part of the permeate gas of the first gas separation membrane unit 11, the recovery rate of the gas B and the concentration of the gas discharged to the outside of the system can be maintained without reducing the membrane area of the third gas separation membrane unit 13. Further, as be seen from the relationship between Example 2-2 and Example 2-3 described later, in the present invention, the recovery rate of the gas B can also be improved by reducing the amount of the discarded gas from the first permeate gas discard line 50.

On the other hand, in the related art, when the ratio of the gas B in the raw material mixed gas increases and the ratio of the gas A decreases during the supply and/or the stop of the supply of the raw material mixed gas, the flow rate of the permeate gas of the first gas separation membrane unit 11 and the amount of the gas A in the permeate gas decrease, the membrane area of the third gas separation membrane unit 13 becomes excessive, the recovery rate of the gas B decreases, and the concentration of the gas B of the gas discharged to the outside of the system increases.

A change in the composition of the raw material mixed gas (in particular, a change in the concentration of the gas A or the gas B) can be detected by a sensor (not shown). The sensor is not particularly limited as long as it can measure the concentration of the gas A or the gas B, and a known sensor can be used depending on the use environment or the type of the gas. Examples thereof include a CH₄ densitometer, a CH₄ detector, a CO₂ densitometer, and a CO₂ detector. In addition, analysis equipment to which a gas chromatograph analysis technique or an infrared spectroscopy technique is applied is also preferably used.

In the present invention, it is possible to operate the gas separation system without changing the number of operating modules of the third gas separation membrane unit 13 in operation and/or between operations of the gas separation system. "In operation" is a state from the start of the supply of the raw material mixed gas into the gas separation system to the continuous supply of the raw material mixed gas to the stop of the supply of the raw material mixed gas, during which the gas flows from the raw material mixed gas supply line 16 to each of the units 11, 12, and 13. "Between operations" is a period from when the gas flow from the raw material mixed gas supply line 16 to each of the units 11, 12, and 13 is stopped to when the gas flow is restarted. The operating module is a module that contributes to gas separation.

In some conventional systems, the number of operating modules is adjusted by an opening/closing valve or the like installed in each module in response to a change in the composition of the raw material mixed gas or a change in the gas flow rate. However, in the system, on/off valves of individual modules are required, and a degree of deterioration of membrane permeability or the like varies between a module that continues operation and a closed module, which may lead to a decrease in system performance.

On the other hand, in the present invention, since it is not necessary to change the number of operating modules in operation and/or between operations, it is possible to avoid the deterioration of the system performance. In the present invention, it is also preferable that the number of operating modules of the first gas separation membrane unit 11 and the second gas separation membrane unit 12 is not changed in operation and/or between operations of the gas separation system.

In order to enhance the membrane area reduction effect due to setting the first permeate gas discard line 50, in the present invention, the ratio (F2/F1) of the flow rate F2 of the discarded gas to the flow rate F1 of the permeate gas of the first gas separation membrane unit 11 is preferably 0.1% or more, and more preferably 0.3% or more. The ratio (F2/F1) of the flow rate F2 of the discarded gas to the flow rate F1 of the permeate gas of the first gas separation membrane unit 11 is preferably 30% or less from the viewpoint of improving the recovery rate of the gas B and reducing the concentration of the gas B discharged to the outside of the system, and more preferably 20% or less.

In order to enhance the membrane area reduction effect due to setting the first permeate gas discard line 50, in the present invention, the ratio (F2/F) of the flow rate F2 of the discarded gas to the flow rate F flowing into the first gas separation membrane unit 11 is preferably 0.05% or more, more preferably 0.1% or more, and still more preferably 0.3% or more. The ratio (F2/F) of the flow rate F2 of the discarded gas to the flow rate F flowing into the first gas separation membrane unit 11 is preferably 30% or less from the viewpoint of improving the recovery rate of the gas B and reducing the concentration of the gas B discharged to the outside of the system, more preferably 20% or less, and still more preferably 15% or less.

In order to enhance the membrane area reduction effect due to setting the first permeate gas discard line 50, in the present invention, the ratio (F2/F') of the flow rate F2 of the discarded gas to the flow rate F' flowing into the second gas separation membrane unit 12 is preferably 0.1% or more, and more preferably 0.2% or more. Further, the ratio (F2/F') of the flow rate F2 of the discarded gas to the flow rate F' flowing into the second gas separation membrane unit 12 is preferably 30% or less from the viewpoint of improving the recovery rate of the gas B and reducing the concentration of the gas B discharged to the outside of the system, and more preferably 25% or less.

In order to particularly enhance the effect due to setting the first permeate gas discard line 50, for example, when the gas A is CO₂ and the gas B is CH₄, the gas separation selectivity of the membrane of the third gas separation membrane unit 13 is preferably P'_{CO2}/P'_{CH4} of 5 or more and 100 or less, more preferably 10 or more and 90 or less, still more preferably 20 or more and 80 or less, and particularly preferably 30 or more and 80 or less. The unit of the permeation rate P' is × 10⁻⁵cm³(STP)/cm² • sec • cmHg.

In the same case, the gas separation selectivity of the membrane of the first gas separation membrane unit 11 is preferably P'_{CO2}/P'_{CH4} of 5 or more and 100 or less, more preferably 10 or more and 90 or less, still more preferably 20 or more and 80 or less, and particularly preferably 30 or more and 80 or less.

In the same case, the gas separation selectivity of the membrane of the second gas separation membrane unit 12 is preferably P'_{CO2}/P'_{CH4} of 5 or more and 100 or less, more preferably 10 or more and 90 or less, still more preferably 10 or more and 70 or less, and particularly preferably 10 or more and 60 or less.

The first gas separation membrane unit 11 and the second gas separation membrane unit 12 has the same or different gas separation selectivity. The first gas separation membrane unit 11 and the third gas separation membrane unit 13 has the same or different gas separation selectivity. The gas separation selectivity of the membrane of the unit I and the gas separation selectivity of the membrane of the unit II being the same means that, for example, a value of the gas separation selectivity of the membrane of the unit I/the gas separation selectivity of the membrane of the unit II is less than 1.1, and the value of the separation selectivity of the unit I/the separation selectivity of the unit II is less than 1.1. The gas separation selectivity refers to P'_{A}/P'_{B}.

In the present invention, in order to obtain high purity at a high recovery rate while suppressing the compression power and the membrane area, the permeation rate P'_{A} of the gas A of the gas separation membrane of each gas separation membrane unit is preferably 1.5×10⁻⁵cm³(STP)/cm²•sec•cmHg or more and 100×10⁻⁵cm³(STP)/cm²•sec• cmHg or less, and more preferably 2×10⁻⁵cm³(STP)/cm²•sec•cmHg or more and 80×10⁻⁵cm³(STP)/cm²•sec•cmHg or less.

In the present invention, in order to obtain high purity with a high recovery rate while suppressing the compression power and the membrane area, the permeation rate P'_{B} of the gas B of the gas separation membrane of each gas separation membrane unit is preferably 0.03×10⁻⁵cm³(STP)/cm² • sec • cmHg or more and 3 × 10⁻⁵cm³(STP)/cm² • sec • cmHg or less, more preferably 0.05×10⁻⁵cm³(STP)/cm² • sec • cmHg or more and 2.5×0⁻⁵cm³(STP)/cm² • sec • cmHg or less, and most preferably 1.5×10⁻⁵cm³(STP)/cm² • sec • cmHg or less.

The gas separation selectivity and the gas permeation rate are 40°C.

In the present invention, the reflux rate C3 from the third gas separation membrane unit 13 (that is, the flow rate of the non-permeate gas discharged from the third gas separation membrane unit 13 with respect to the flow rate of the gas flowing into the third gas separation membrane unit 13.) is preferably, for example, 70% or less from the viewpoint of reducing the required compression energy of the compression part 21, more preferably 60% or less, and most preferably 40% or less. On the other hand, the reflux rate C3 from the third gas separation membrane unit 13 (that is, the flow rate of the non-permeate gas discharged from the third gas separation membrane unit 13 with respect to the flow rate of the gas flowing into the third gas separation membrane unit 13.) is generally preferably 1% or more, and more preferably 5% or more.

In the present invention, the reflux rate C2 from the second gas separation membrane unit 12 (that is, the flow rate of the permeate gas discharged from the second gas separation membrane unit 12 with respect to the flow rate of the gas flowing into the second gas separation membrane unit 12.) is preferably, for example, 70% or less from the viewpoint of reducing the required compression energy of the compression part 21, more preferably 60% or less, and most preferably 40% or less. On the other hand, the reflux rate C2 from the second gas separation membrane unit 12 (that is, the flow rate of the permeate gas discharged from the second gas separation membrane unit 12 with respect to the flow rate of the gas flowing into the second gas separation membrane unit 12.) is preferably 5% or more, and more preferably 10% or more.

Further, although not limited thereto, the ratio of the reflux rate C3 to the reflux rate C2 is preferably 0.1 or more, more preferably 0.6 or more, and particularly preferably 0.65 or more. By setting as described above, the balance among the recovery rate, the membrane area, and the compression energy can be easily obtained. C3/C2 is generally preferably 5 or less, more preferably 2 or less.

The gas separation membrane in each of the gas separation membrane units 11, 12, and 13 can be appropriately selected in accordance with the type of the supplied mixed gas or the target product gas. As the gas separation membrane, the membranes as those used in the art can be used without particular limitation. Examples thereof include rubber-like polymer materials such as silicone resins and polybutadiene resins, glass-like polymer materials such as polyimide, polyetherimide, polyamide, polyamideimide, polysulfone, polycarbonate, and cellulose, and ceramic materials such as zeolite. The gas separation membrane may be any of a homogeneous membrane, an asymmetric membrane composed of a homogeneous layer and a porous layer, and a microporous membrane. The gas separation membrane may be housed in the casing in any of a plate-and-frame type, a spiral type, and a hollow fiber type. A particularly suitable gas separation membrane is an aromatic polyimide hollow fiber gas separation membrane having a homogeneous layer thickness of 10 nm or more and 200 nm or less, a porous layer thickness of 20 µm or more and 200 µm or less, and an inner diameter of about 30 µm or more and 500 µm or less.

One gas separation membrane module or a plurality of gas separation membrane modules may be provided in one gas separation membrane unit. When two or more gas separation membrane modules are provided in one gas separation membrane unit, these are preferably connected in parallel in the unit. When each gas separation membrane unit includes a plurality of the gas separation membrane modules, the membrane area in the unit can be easily adjusted by changing the number of the gas separation membrane modules.

The kind of the raw material mixed gas and the separation membrane module is not limited, but for example, a separation membrane module having a higher permeation rate of carbon dioxide (CO₂) than methane (CH₄) is used as the separation membrane module 40 to which the raw material mixed gas is supplied, and a gas containing CH₄ and CO₂ is used as the raw material mixed gas; and a module having a higher permeation rate of the oxygen gas (O₂) than the nitrogen gas (N₂) is used as the separation membrane module 40 to which the raw material mixed gas is supplied, and a gas containing N₂ and O₂ is used as the raw material mixed gas. Examples of the raw material mixed gas containing CH₄ and CO₂ include biogas, landfill gas, and natural gas. Examples of the raw material mixed gas containing N₂ and O₂ include air. The biogas is a gas generated when a biomass raw material is brought into contact with a microorganism under anaerobic conditions to perform a fermentation process such as methane fermentation by the microorganism. Examples of the biomass raw material include organic matters such as food waste, agricultural residue, sewage sludge, and livestock waste. The landfill gas refers to a gas generated by microbial decomposition or the like of organic matter in a waste landfill. Biogas and landfill gas are usually mainly composed of methane and carbon dioxide. Biogas and landfill gas are usually mainly composed of methane and carbon dioxide. The present invention is preferably applied to biogas and landfill gas. Although the composition and the flow rate of these gases may not be constant, the present invention can operate the gas separation system without changing the number of modules of each gas separation membrane unit while making the purity and the recovery rate of methane as a product gas extremely stable even in such a case.

In the present invention, when the raw material mixed gas contains CH₄ and CO₂, the raw material mixed gas preferably contains CH₄ in an amount of 30 mol % or more, particularly preferably 40 to 95 mol %. Further, in the present invention, the raw material mixed gas preferably contains 3 to 70 mol % of CO₂, from the viewpoint of high technical significance of the gas separation system of the present invention, and particularly preferably contains 5 to 60 mol % of CO₂. This range may fall within this range at least once if the gas flow rate varies during and/or between operations.

The gas separation system of the present embodiment can be suitably used, for example, in a method for separating and recovering methane gas, which is a gas having low-permeability , from biogas mainly containing methane gas and carbon dioxide gas. The methane gas corresponds to gas B, which is a gas having low-permeability, and the carbon dioxide gas corresponds to gas A, which is a gas having high-permeability. In this case, for example, when the separated and recovered methane gas is supplied to the municipal gas line, a gas compressor as a compression unit may be provided at the non-permeate gas outlet 12b of the second gas separation membrane unit 12 to increase the pressure of the methane gas.

The pressure of the compression part is generally preferably 0.2 MPaG or more and 3.0 MPaG or less, and more preferably 0.3 MPaG or more and 2.4 MPaG or less.

The operation temperature of each gas separation membrane unit is usually preferably 0°C or higher and 80°C or lower, and more preferably 5°C or higher and 60°C or lower. Here, the operation temperature refers to the temperature of the gas at the inlet of the gas separation membrane unit while the mixed gas is supplied to the gas separation membrane unit (gas separation membrane module).

In the present invention, instead of or in addition to controlling the amount of the discarded gas based on a change in the flow rate or composition of the raw material mixed gas, the amount of the discarded gas may be controlled based on a change in the concentration of the separation target gas in the gas discharged to the outside of the system. For example, a gas densitometer (not shown) may be installed on the second non-permeate gas discharge line 80, and the flow rate adjustment valve 60 on the first permeating gas discard line 50 may be controlled according to the measured value of the concentration. Examples of such a control method include a method for periodically detecting the concentration of the gas A in the non-permeate gas discharge line 80 connected to the non-permeate gas outlet 12b of the second gas separation membrane unit 12 in operation, and controlling the flow rate adjustment valve 60 on the first permeating gas discard line 50 so that the amount of the discarded gas increases when the concentration exceeds a specified concentration.

Further, in the present invention, a gas densitometer (not shown) may be installed in the first permeate gas discard line 50, and the flow rate control valve 60 of the first permeate gas discard line 50 may be automatically controlled based on the concentration measurement value.

In the case that the concentration of the gas A in the permeate gas of the first gas separation membrane unit 11 is high (particularly, in the case where the flow rate of the permeate gas of the first gas separation membrane unit 11 is further large.), if the membrane area of the third gas separation membrane unit 13 is small, the product purity is likely to be reduced. Accordingly, there is a method in which the concentration of the gas A in the first permeate gas discard line 50 is periodically measured and the flow rate adjustment valve 60 on the first permeate gas discard line 50 is controlled so as to increase the amount of the discarded gas when the concentration exceeds a predetermined concentration, Conversely, in the case where the concentration of the gas A in the permeate gas of the first gas separation membrane unit 11 is low (particularly, in the case that the flow rate of the permeate gas in the first gas separation membrane unit 11 is less than or equal to a certain value.), by controlling the flow rate control valve 60 on the first permeate gas discard line 50 so as to reduce the amount of discarded gas, as shown in Examples 2-2 and 2-3 described later, the CH₄ recovery rate can be improved.

Further, in the present invention, a gas densitometer (not shown) may be installed in the third permeate gas discharge line 70 for taking out the permeate gas discharged from the third gas separation membrane unit 13 to the outside of the system, and the flow rate control valve 60 of the first permeate gas discard line 50 may be automatically controlled based on the concentration measurement value in the line 70. An increase in the concentration of the gas B in the third permeate gas discharge line 70 leads to a decrease in the recovery rate of the gas B as the product gas. Therefore, when the concentration of the gas B in the third permeate gas discharge line 70 becomes equal to or higher than a predetermined concentration, the flow rate control valve 60 on the first permeate gas discard line 50 may be controlled so as to reduce the discarded gas amount.

In the present invention, a vacuum pump (not shown) may be installed on the third permeate gas discharge line 70, and the gas separation system may be operated by operating the vacuum pump so that the permeate side of the third gas separation membrane unit 13 is depressurized. This configuration is preferable from the viewpoint of easily suppressing the decrease in the purity of the product gas and easily suppressing the required compression energy of the compression part 21 because the permeation of the gas A in the third gas separation membrane unit 13 is promoted even when the membrane area of the third gas separation membrane unit 13 is small.

In addition, a heater may be installed in the non-permeate gas discharge line 14 interposed between the first gas separation membrane unit 11 and the second gas separation membrane unit 12, and the temperature of the gas (hereinafter, also referred to as "operation temperature of the second gas separation membrane unit 12".) flowing into the second gas separation membrane unit 12 may be higher than the temperature of the gas (Hereinafter, also referred to as "operation temperature of the first gas separation membrane unit 11".) flowing into the first gas separation membrane unit 11. It is generally known that, even in the case that the same gas separation membrane is used, when the operation temperature is set to be relatively low, the gas permeation rate is low and the gas separation selectivity is high as compared with the case where the operation temperature is set to be relatively high.

Based on this fact, in the gas separation system and the method for producing enriched gas of the present invention, the operation temperatures of the units 11 and 12 may be made different to make the gas permeation rate of the second gas separation membrane unit 12 higher than that of the first gas separation membrane unit 11 and make the gas separation selectivity of the first gas separation membrane unit 11 higher than that of the second gas separation membrane unit 12.

In the present invention, making the gas separation selectivity of the first gas separation membrane unit 11 higher than that of the second gas separation membrane unit 12 has advantages that: the recovery rate of the gas B is increased; the concentration of the gas B in the gas discharged to the outside of the system is reduced; the required compression energy of the compression part 21 is reduced; and the gas permeation rate of the second gas separation membrane unit 12 is higher than that of the first gas separation membrane unit 11 to reduce the membrane area of the second gas separation membrane unit 12.

Further, the gas separation membrane constituting the first gas separation membrane unit and the gas separation membrane constituting the second gas separation membrane unit may be made different in membrane type to make the gas separation permeability of the first gas separation membrane unit and the gas separation permeability of the second gas separation membrane unit different from each other. As described above, making the gas separation selectivity of the first gas separation membrane unit 11 higher than that of the second gas separation membrane unit 12 has the above-described advantages.

The gas separation membrane constituting the first gas separation membrane unit and the gas separation membrane constituting the third gas separation membrane unit may be made different in membrane type to make the gas separation permeability of the first gas separation membrane unit and the gas separation permeability of the third gas separation membrane unit different from each other. For example, in the present invention, it is preferable to make the gas separation selectivity of the first gas separation membrane unit 11 lower than that of the third gas separation membrane unit 13 because it is possible to reduce the membrane area of the first gas separation membrane unit 11.

The gas separation membrane constituting the second gas separation membrane unit and the gas separation membrane constituting the third gas separation membrane unit may be made different in membrane type to make the gas separation permeability of the second gas separation membrane unit and the gas separation permeability of the third gas separation membrane unit different from each other. It is preferable to make the gas separation selectivity of the second gas separation membrane unit 12 lower than that of the third gas separation membrane unit 13 because there is an advantage that the membrane area of the second gas separation membrane unit 12 can be reduced.

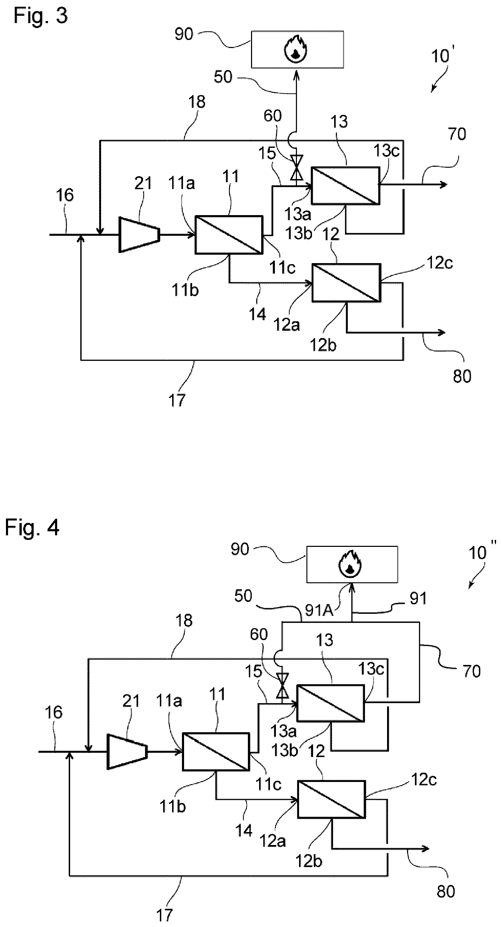

Next, a gas separation system according to the second and third embodiments of the present invention and a method for producing enriched gas according to the second and third aspects of the present invention using the same will be described with reference to Figs. 3 and 4. In the description of the second embodiment and the second aspect, components similar to those of the first embodiment and the first aspect are denoted by the same reference numerals, description thereof is omitted, and points different from those of the first embodiment and the first aspect will be mainly described.

As shown in Fig. 3, the gas separation system 10' of the second embodiment includes a combustion device 90 located on the downstream side (gas discharge side) of the first permeate gas discard line 50. The first permeate gas discard line 50 is connected to the combustion device 90 at an end portion (outlet) on the gas discharge side. Thus, the fuel component in the permeate gas discharged from the first permeate gas discard line 50 can be combusted in the combustion device. As the combustion device, a conventionally known apparatus can be used without limitation. When the gas B is methane, the methane in the discarded gas can be prevented from being discharged to the outside of the system by using the combustion device.

As shown in Fig. 4, the gas separation system 10" of the third embodiment is provided with a mixing line 91 which is a merging line in which the first permeate gas discard line 50 and the third permeate gas discharge line 70 merge on the respective discharge sides (the outlet sides). The mixing line 91 has an outlet 91A for discharging the merged gas at an end portion on the gas discharge side. According to the mixing line 91, since two gas lines through which a minute amount of gas B and a large amount of gas A flow are merged, these gases can be efficiently handled, and in addition, by measuring the concentration of gas B in the mixing line 91, there is an advantage that an operation of keeping the recovery rate of gas B or the concentration of gas B in the gas discharged to the outside of the system to be constant can be easily performed. The installation of this mixing line 91 has the advantage of successfully improving environmental considerations and other benefits.

Accordingly, in the present invention, a gas densitometer (not shown) may be installed in the mixing line 91, and the flow rate control valve 60 of the first permeate gas discard line 50 may be automatically controlled based on the concentration measurement value. As described above, when the flow rate of the raw material mixed gas decreases or when the concentration of the gas A in the raw material mixed gas decreases, the concentration of the gas B in the mixing line 91 is likely to increase. There is a method in which the concentration of the gas B in the mixing line 91 is periodically measured, and when the concentration exceeds a predetermined concentration, the flow rate control valve 60 on the first permeate gas discard line 50 is controlled so as to decrease the amount of the discarded gas. The amount of the discarded gas can be set by calculation based on, for example, the operation temperature and the operation pressure of each unit, the gas separation selectivity of each unit, the raw material mixed gas flow rate, and the number of modules.

In the example of Fig. 4, the combustion device 90 is provided in the outlet 91A on the gas discharge side (outlet side) of the mixing line 91, and the mixing line 91 is connected to the combustion device 90 on the gas discharge side. In the example of Fig. 4, the combustion device 90 is located on the gas supply side (gas discharge side) by setting as described above. By operating the system so as to keep the concentration of the gas B in the mixing line 91 constant, combustion in the combustion device can also be stabilized. As the combustion device, a commercially available combustion device can be appropriately used. By using the combustion device, when the gas B is methane, it is possible to prevent methane from being discharged to the outside of the environment in a more efficient system.

Although the present invention has been described based on preferred embodiments and embodiments thereof, the present invention is not limited to the embodiments and aspects. For example, in the above-described embodiment and the embodiment, as an example of each gas separation membrane unit, a unit constituted by a gas separation membrane module having a hollow fiber membrane is used.

Further, in addition to the compression part in the above-described embodiments and embodiments, a decompression part may be provided on the permeation side of any one or two or more of the units to apply power to the mixed gas flow to pass through the separation membrane. As such a pressure reducing device, a known vacuum pump or the like can be used.

### Examples

Hereinafter, the present invention will be described in more detail with reference to Examples. However, the scope of the present invention is not limited to such examples.

### [Examples 1-1 to 1-3]

The gas separation system 10 shown in Fig. 1 was used to separate a mixed gas containing carbon dioxide and methane. A compressor was used as the compression part 21 in the system 10. The flow rate (flow rate flowing into the system) and composition of the raw material mixed gas were as shown in Table 1 below. The temperature of the raw material mixed gas was 35°C, and the raw material mixed gas was heated by compression by a compression part, cooled by a cooling device (not shown), and supplied to each gas separation membrane unit. The operation temperature of each gas separation membrane unit and the pressure of the gas extruded by the compression part 21 and flowing into the first gas separation membrane unit 11 are shown in Table 1 as the operation pressure.

As the modules constituting the first to third gas separation membrane units 11, 12, and 13, a module in which a gas separation membrane composed of a polyimide hollow fiber membrane is housed in a case was used, and a gas separation membrane module A was used. In the gas separation membrane module A, P' CO₂ was 9.9, P' CH₄ was 0.18, and P'_{CO2}/P'_{CH4} was 55. These are numerical values at an operation temperature of 40°C. The value of the membrane area of one module was 24m2.

Table 1 shows the number of modules of each gas separation membrane unit and the flow rate of the gas flowing into each gas separation membrane unit. Table 1 shows the flow rate of the gas (discarded gas) in the first permeate gas discard line 50, the concentration of CH₄ in the gas, and the concentration of CH₄ in the permeate gas in the third gas separation membrane unit 13.

In addition, the ratio of the total flow rate of CH₄ of both gases to the total flow rate of the discarded gas and the permeate gas of the third gas separation membrane unit 13 is shown in Table 1 as "total CH₄ concentration (mol %)".

Furthermore, CH₄ purity and recovery rate (the amount of CH₄ per flow rate in the non-permeating gas of the second gas separation membrane unit 12 when the amount of CH₄ per flow rate in the raw material mixed gas is taken as 100%.) of the product gas (non-permeate gas of the second gas separation membrane unit 12) are shown in Table 1.

### [Comparative Examples 1-1 to 1-3]

In Fig. 1, the total amount of the permeate gas in the first gas separation membrane unit 11 was passed through the third gas separation membrane unit 13 without discarding the gas from the first permeate gas discard line 50. The number of modules was the number shown in Table 1. Except for these points, the operation was the same as in Examples 1-1 to 1-3.

**[Table 1]**

| | Raw material mixed gas | | | Operation temperature | Operation pressure | Number of modules | | | | Flow rate | | | | | | | Reflux rate | | | Product gas | | Exhaust gas | | | |
|---|---|---|---|---|---|---|---|---|---|---|---|---|---|---|---|---|---|---|---|---|---|---|---|---|---|
| | Flow rate | Compostion | | | | First gas separation membrane unit | Second gas separation membrane unit | Third gas separation membrane unit | Total | First unit F | First permeate gas F1 | Second unit F | Third unit | F2/ F (%) | F2/ F1 (%) | F2/ F' (%) | Second reflux rate C2 (%) | Third reflux rate C3 (%) | C3/C2 | CH₄ concentration | CH₄ recovery rate | Discarded gas | | Third permeate gas CH₄ concentration | Total CH₄ concentration |
| | | CO₂ | CH₄ | | | | | | | | | | | | | | | | | | | Flow rate F2 | CH4 concentration | | |
| | Nm³/h | mol% | mol% | °C | MPaG | pc | pc | pc | pc | Nm³/h | Nm³/h | Nm³/h | Nm³/h | | | | | | | mol% | % | Nm³/h | mol% | mol% | mol% |
| Ex. 1-1 | 400 | 40 | 60 | 20 | 1.4 | 36 | 32 | 28 | 96 | 522 | 222 | 299 | 208 | 3 | 7 | 5 | 21 | 29 | 1.4 | ≥99.0 | 99.0 | 15 | 11 | 0.6 | 1.6 |
| Ex. 1-2 | 400 | 45 | 55 | 20 | 1.4 | 36 | 32 | 28 | 96 | 536 | 260 | 276 | 237 | 4 | 9 | 8 | 21 | 33 | 1.5 | ≥99.0 | 98.7 | 23 | 9 | 0.5 | 1.6 |
| Ex. 1-3 | 400 | 50 | 50 | 20 | 1.4 | 36 | 32 | 28 | 96 | 562 | 309 | 252 | 274 | 6 | 11 | 14 | 22 | 39 | 1.8 | ≥99.0 | 98.4 | 35 | 7 | 0.3 | 1.6 |
| Co. Ex. 1-1 | 400 | 40 | 60 | 20 | 1.4 | 34 | 32 | 44 | 110 | 493 | 193 | 300 | 193 | - | - | - | 21 | 16 | 0.8 | ≥99.0 | 99.0 | 0 | - | 1.6 | 1.6 |
| Co. Ex. 1-2 | 400 | 45 | 55 | 20 | 1.4 | 34 | 32 | 49 | 115 | 487 | 212 | 276 | 212 | - | - | - | 21 | 14 | 0.6 | ≥99.0 | 98.7 | 0 | - | 1.6 | 1.6 |
| Co. Ex. 1-3 | 400 | 50 | 50 | 20 | 1.4 | 34 | 32 | 55 | 121 | 482 | 231 | 251 | 231 | - | - | - | 22 | 12 | 0.6 | ≥99.0 | 98.4 | 0 | - | 1.6 | 1.6 |

As shown in Table 1, even when the composition of the raw material mixed gas was changed in Examples 1-1 to 1-3, the purity of the product gas could be maintained without increasing or decreasing the number of modules, and the CH₄ concentration in the exhaust gas, which is an index of purity and recovery rate, could be kept constant. The recovery rate was also 98.4% or more, which was generally good. On the other hand, in Comparative Examples 1-1 to 1-3, in order to keep the concentration of CH₄ in the exhaust gas, which is an index of product purity and recovery rate, constant, it was necessary to significantly increase the membrane area of the third gas separation membrane unit 13.

### [Examples 2-1 to 2-3]

From the operation conditions of Example 1-1 (described as Example 2-1 in Table 2), the flow rate of the raw material mixed gas was changed as in Examples 2-2 and 2-3, and the flow rate of the first permeate gas discard line 50 was changed accordingly. Except for this point, the structure was the same as that of Example 1-1.

### [Comparative Examples 2-1 to 2-3]

In Fig. 1, the total amount of the permeate gas in the first gas separation membrane unit 11 was passed through the third gas separation membrane unit 13 without discarding the gas from the first permeate gas discard line 50. The number of modules was the number shown in Table 2. Except for these points, Examples 2-1 to 2-3 were used.

**[Table 2]**

| | Raw material mixed gas | | | Operation temperature | Operation pressure | Number of modules | | | | Flow rate | | | | | | | Reflux rate | | | Product gas | | Exhaust gas | | | |
|---|---|---|---|---|---|---|---|---|---|---|---|---|---|---|---|---|---|---|---|---|---|---|---|---|---|
| | Flow rate | Compostion | | | | First gas separation membrane unit | Second gas separation membrane unit | Third gas separation membrane unit | Total | First unit F | First permeate gas F1 | Second unit F' | Third unit | F2/ F (%) | F2/ F1 (%) | F2/ F' (%) | Second reflux rate C2 (%) | Third reflux rate C3 (%) | C3/C2 | CH₄ concentration | CH₄ recovery rate | Discarded gas | | Third permeate gas CH₄ concentration | Total CH₄ concentration |
| | | CO₂ | CH₄ | | | | | | | | | | | | | | | | | | | Flow rate F2 | CH4 concentration | | |
| | Nm³/h | mol% | mol % | °C | MPaG | pc | pc | pc | pc | Nm³/h | Nm³/h | Nm³/h | Nm³/h | | | | | | | mol% | % | Nm³/h | mol% | mol% | mol% |
| Ex. 2-1 | 400 | 40 | 60 | 20 | 1.4 | 36 | 32 | 28 | 96 | 522 | 222 | 299 | 208 | 3 | 7 | 5 | 21 | 29 | 1.4 | ≥99.0 | 99.0 | 15 | 11 | 0.6 | 1.6 |
| Ex. 2-2 | 320 | 40 | 60 | 20 | 1.4 | 36 | 32 | 28 | 96 | 419 | 180 | 239 | 174 | 1 | 3 | 2 | 21 | 29 | 1.4 | ≥99.0 | 99.0 | 6 | 14 | 1.0 | 1.6 |
| Ex. 2-3 | 320 | 40 | 60 | 20 | 1.4 | 36 | 32 | 28 | 96 | 424 | 184 | 240 | 183 | 0.2 | 1 | 0. 4 | 21 | 30 | 1.4 | ≥99.0 | 99.3 | 1 | 13 | 0.9 | 1.0 |
| Co. Ex. 2-1 | 400 | 40 | 60 | 20 | 1.4 | 34 | 32 | 44 | 110 | 493 | 193 | 300 | 193 | - | - | - | 21 | 16 | 0.8 | ≥99.0 | 99.0 | 0 | - | 1.6 | 1.6 |
| Co. Ex. 2-2 | 320 | 40 | 60 | 20 | 1.4 | 34 | 32 | 35 | 101 | 406 | 166 | 240 | 166 | - | - | - | 21 | 22 | 1.0 | ≥99.0 | 99.0 | 0 | - | 1.6 | 1.6 |
| Co. Ex. 2-3 | 320 | 40 | 60 | 20 | 1.4 | 34 | 32 | 29 | 95 | 417 | 175 | 242 | 175 | - | - | - | 21 | 26 | 1.2 | ≥99.0 | 99.3 | 0 | - | 1.0 | 1.0 |

As be seen from the results in Table 2, in Examples 2-1 to 2-3, by installing the first permeate gas discard line 50, the product purity and the recovery rate can be maintained even when the concentration of the raw material mixed gas is changed, and the operation can be performed without increasing the number of modules while maintaining the concentration of CH₄ in the exhaust gas constant. On the other hand, as shown in Comparative Examples 2-1 to 2-3, in these Comparative Examples, in order to obtain the same operation pressure, recovery rate, and product purity as those of Examples 2-1 to 2-3, the number of modules has to be significantly increased.

### Industrial Applicability

According to the present invention, there is provided a three-stage gas separation system which can be operated while suppressing the influence on the purity and recovery rate of enriched gas (product gas) without changing the number of modules to be operated in the gas separation membrane unit even when the composition or the flow rate of the raw material mixed gas fluctuates.

## Claims

1. A gas separation system for supplying raw material mixed gas to gas separation membrane unit and enriching at least one of gases contained in raw material mixed gas,
wherein the gas separation system comprises: a first gas separation membrane unit; a second gas separation membrane unit, and a third gas separation membrane unit,
the first gas separation membrane unit, the second gas separation membrane unit and the third gas separation membrane unit each include at least a gas inlet, a permeate gas outlet, and a non-permeate gas outlet,
the non-permeate gas outlet of the first gas separation membrane unit and the gas inlet of the second gas separation membrane unit are connected by a non-permeate gas discharge line,
the permeate gas outlet of the first gas separation membrane unit and the gas inlet of the third gas separation membrane unit are connected by a permeate gas discharge line,
a raw material mixed gas supply line is connected to the gas inlet of the first gas separation membrane unit, and a compression part is disposed in the middle of the raw material mixed gas supply line,
the permeate gas outlet of the second gas separation membrane unit and a position on the suction side of the compression part in the raw material mixed gas supply line are connected by a permeate gas recycle line,
the non-permeate gas outlet of the third gas separation membrane unit and a position on the suction side of the compression part in the raw material mixed gas supply line are connected by a non-permeate gas recycle line,
concentrated and enriched gas is taken out from the non-permeate gas outlet of the second gas separation membrane unit, and
the permeate gas discharge line includes a first permeate gas discard line for discharging a part of the permeate gas discharged from the first gas separation membrane unit to the outside of the gas separation system.

2. The gas separation system of claim 1, wherein in operation and/or between operations of the gas separation system, the number of operating modules of the third gas separation membrane unit is constant.

3. The gas separation system according to claim 1 or 2, wherein a combustion device was connected to an outlet of the first permeate gas discard line.

4. The gas separation system according to claim 1 or 2, wherein an outlet of the first permeate gas discard line and the permeate gas outlet of the third separation membrane unit are connected by a mixing line, and a mixing line outlet is provided in the mixing line.

5. The gas separation system of claim 4, wherein a combustion device was connected to the mixing line outlet.

6. The gas separation system according to claim 1 or 2, wherein the gas separation system is configured such that the amount of permeate gas discharged to the outside of the system through the first permeate gas discard line is increased or decreased based on a change in the flow rate of the raw material mixed gas, a change in the composition of the raw material mixed gas, or a change in the concentration of the separation target gas in the gas discharged to the outside of the system.

7. A gas separation system according to claim 1 or 2, wherein the raw material mixed gas comprises a biogas or a landfill gas.

8. A method for producing enriched gas by supplying raw material mixed gas to a gas separation system and enriching at least one of gases contained in raw material mixed gas,
wherein the gas separation system comprises: a first gas separation membrane unit; a second gas separation membrane unit, and a third gas separation membrane unit,
the first gas separation membrane unit, the second gas separation membrane unit and the third gas separation membrane unit each include at least a gas inlet, a permeate gas outlet, and a non-permeate gas outlet,
the non-permeate gas outlet of the first gas separation membrane unit and the gas inlet of the second gas separation membrane unit are connected by a non-permeate gas discharge line,
the permeate gas outlet of the first gas separation membrane unit and the gas inlet of the third gas separation membrane unit are connected by a permeate gas discharge line,
a raw material mixed gas supply line is connected to the gas inlet of the first gas separation membrane unit, and a compression part is disposed in the middle of the raw material mixed gas supply line,
the permeate gas outlet of the second gas separation membrane unit and a position on the suction side of the compression part in the raw material mixed gas supply line are connected by a permeate gas recycle line,
the non-permeate gas outlet of the third gas separation membrane unit and a position on the suction side of the compression part in the raw material mixed gas supply line are connected by a non-permeate gas recycle line,
concentrated and enriched gas is taken out from the non-permeate gas outlet of the second gas separation membrane unit, and
the permeate gas discharge line includes a first permeate gas discard line for discharging a part of the permeate gas discharged from the first gas separation membrane unit to the outside of the gas separation system.
